# EUROPEAN PATENT SPECIFICATION

(11) **EP 3 162 196 B1**
(45) Date of publication and mention of the grant of the patent: **26.06.2019**
(21) Application number: 15191731.7
(22) Date of filing: 27.10.2015
(51) Int. Cl.: A01K 1/015

(54) **A GROOVED FLOOR ELEMENT FOR A COWSHED, A SUBSTRATE AND A FLEXIBLE MAT**
GERILLTES BODENELEMENT FÜR EINEN KUHSTALL, SUBSTRAT UND BIEGSAME MATTE
ÉLÉMENT DE PLANCHER CANNELÉ POUR UNE ÉTABLE, UN SUBSTRAT ET UN TAPIS FLEXIBLE

(43) Date of publication of application: 03.05.2017
(73) Proprietor: United Business Care B.V., 5451 HZ Mill (NL)
(72) Inventor: THOMASSEN, Mark Anthonius Johannes, 5437 AP Beers (NL)
(74) Representative: De Vries & Metman

(56) References cited:
- EP-A1- 0 609 581
- WO-A1-2010/092177
- WO-A1-2012/004717
- DE-U1-202011 103 860
- GB-A- 2 179 987

## Description

The present invention relates to a grooved floor element for a cowshed, comprising a substrate and a walking surface broken by parallel grooves, wherein the walking surface between two neighbouring grooves has a hard region formed by a rigid member and a soft region formed by an elastic member, wherein the rigid member is fixed to the substrate.

Such a floor element is known from EP 1 326 490. A typical cowshed for housing dairy cows comprises a row of resting cubicles. Each resting cubicle provides space for one cow. This is a space-saving system which allows a relatively high number of animals to be housed in a given area. A walking alley extends along the row of cubicles and has a floor which comprises grooved floor elements. The grooves of the floor elements are aligned in longitudinal direction of the walking alley such that urine can drain along the grooves to a liquid-manure reservoir. Solid manure is removed from the floor at the walking alley frequently by means of a manure scraper to a slurry pit at the end of the alley. The manure scraper can be controlled automatically. For example, it is moved back and forth along the walking alley 5-10 times a day.

The known floor element has a concrete substrate. The walking surface of the floor element comprises grooves which have rigid edges, whereas elastic coverings are located between the rigid edges. Consequently, the walking surface has alternatingly rigid and elastic areas as seen in transverse direction of the grooves. A drawback of the known grooved floor element is that the rigid areas are broken by the grooves such that the rigid edges along the grooves are relatively narrow and sharp. This may lead to uneven claw support and less comfort for the animals. A claw may easily slip off the rigid rim into the groove, which may cause claw problems.

WO 2012/004717 is related to a stable floor element comprising a supporting element, with a service face situated at the top when in use and a bottom face situated on the bottom side, whereby the service face has one or several levels, recesses or openings, whereby a comfort element made of rubber or an elastic synthetic material is provided in at least one of these levels, recesses or openings. At least one of the aforesaid levels, recesses or openings is at least partly confined by two opposite side walls and at least one bearing wall directed parallel or almost parallel to the aforesaid service face, such that an aforesaid comfort element rests at least partly on this bearing wall.

DE 20 2011 103 860 U1 is related to a floor covering segment for a stable floor comprising a support plate and an elastic plate cover on an upper side of the support plate.

WO 2010/092177 is related to a floor tile which is provided for a floor for an animal house. The floor tile has a main body, at least one pair of flexible projections adjacent to one another and integral with the main body and projecting from its lower surface, the pair of flexible projections located adjacent one another. The floor tile is retained in position on the floor for an animal house by the pair of flexible projections extending into an elongated aperture in the floor, and an expansion member is received through an aperture extending from the tile's upper surface to the lower surface between the flexible projections, so that the expansion member forces apart the flexible projections to engage with the sides of said the floor's elongated aperture, to retain the floor tile in position.

EP 0 609 581 is related to a grid floor for a cattle stable. This floor comprises a grid formed by a number of mutually parallel supported beams with interspaces and a receiving surface arranged under the grid with a passage opening. The surface of the receiving surface is smooth and transporting means are arranged which are movable over the receiving surface and to the passage opening.

GB 2 179 987 is related to a grid for use in stalls, stables, pigsties and the like which is formed of a plurality of cross-members secured to a plurality of longitudinal elements e.g. in the form of wires, the longitudinal elements having flattened upper surfaces arranged in the same general plane to define a walking surface of the grid as a whole. Some or all of the flattened surfaces of the elements are provided with a plurality of spaced apart projections which help to prevent animals walking on the grid from slipping thereon.

The invention provides a floor for a cowshed according to claim 1 and a grooved floor element according to claim 10.

An advantage of the floor element according to the invention is that the flexible mat is locked with respect to the substrate in the plane of the walking surface, i.e. in horizontal direction when the floor element is installed in a cowshed. Hence the rigid member has two functions: it holds the flexible mat to the substrate whereas it provides a hard region in the walking surface. The latter aspect is advantageous in terms of anti-slip properties and proper claw wear. The alternating rigid and soft regions provide a comfortable walking surface for animals.

Since the flexible mat extends up to the neighbouring grooves the side edges of the flexible mat form one of the side walls of the respective neighbouring grooves. The soft edges along the grooves provide a stable feeling when a claw is partly placed on the edge and partly located above the groove. In that situation the claw will locally compress the flexible mat instead of tilting at the edge of the groove such as in case of a rigid edge. Therefore, the invention provides a comfortable floor element.

The flexible mat may be a rubber mat. In practice the floor element will have more than two grooves, hence more than one flexible mat. It is also possible that the flexible mat ends at a groove at one side thereof and ends at a side edge of the floor element at the other end. In that case the side edge of the mat at the side edge of the floor element may form a side wall of a groove which is formed together with a cooperating neighbouring floor element after installing the floor elements. The floor element may be rectangular as seen from above, whereas the grooves extend in longitudinal direction thereof. The substrate can be fixed directly to a subfloor.

The substrates and the mats can be supplied as separate parts to a cowshed and assembled on site. In fact the floor element is an assembly of the substrate and the mat. As described hereinbefore the mat is locked with respect to the substrate in horizontal direction by the rigid member and supported by the substrate, but it may also be fixed to the substrate at a distance from the rigid member. Preferably, the mat is releasably attached to the substrate such that it can be replaced easily at the end of its lifetime. The lifetime of the substrate and the rigid member will be longer than the lifetime of the mat.

In a practical embodiment the rigid member is located at the centre between the neigbouring grooves. It may have a rectangular shape as seen from above, whereas its longitudinal direction may be parallel to the grooves.

In order to obtain optimal comfort for cows the length of the rigid member as measured in transverse direction of the grooves is larger than 15% of the distance between two neighbouring grooves, and preferably more than 30%. This provides a balanced distribution between the rigid and flexible region.

The rigid member is a first rigid member, whereas a second rigid member is located at a distance from the first rigid member in longitudinal direction of the grooves, wherein the flexible mat also surrounds the second rigid member in the plane of the walking surface. In this case a single flexible mat is locked in horizontal direction with respect to the substrate by means of two rigid members. In a practical embodiment, it is only the flexible mat which forms the walking surface between the neighbouring grooves between the two rigid members in longitudinal direction of the grooves.

The rigid member may be integral with the substrate. This simplifies the manufacturing process of the floor element dramatically, since it is only the substrate and the one or more flexible mats which need to be assembled to form the grooved floor element.

The substrate may be made of rigid plastic, for example a composite. This is advantageous in case of floor elements which are not intended to be applied as self-supporting floor elements, such as in case of conventional concrete slatted floor elements which are installed above a manure reservoir. The plastic substrate can be thin, for example thinner than 50 mm, such that it can be placed on an existing concrete subfloor. This is particularly beneficial for renovating existing floor systems. It is not necessary to remove the existing concrete floor system, but the relatively thin floor elements including the plastic substrate can be simply fixed onto the existing concrete floor system which functions as a stable supporting subfloor. It does not matter whether the existing floor system is a slatted floor system or a grooved floor system. For example, the subfloor may be made of prefabricated plates, it may be a solid ground floor such as a concrete floor or it may be a less solid soil. If the subfloor is a porous material it may be covered or coated by an impervious material before installing the substrates. It is also clear that transporting and installation costs are significantly lower in case of the relatively thin floor elements.

In practice the thickness of the floor element may be such that the depths of the respective grooves are larger than 40% of the thickness of the floor element, and preferably more than 60% thereof. These dimensions typically deviate from groove depths in the field of known concrete floor elements and can be applied since the floor element can be installed on a supporting subfloor such that it is not a self-supporting floor element.

The substrate may have an elevated portion at the location where it supports the flexible mat such that the flexible mat is relatively thin whereas the depths of the grooves may still be relatively large. In this case the walls of the grooves are partly formed by the flexible mat and partly formed by the substrate. In other words the grooves are partly formed by parallel elongate recesses in the substrate.

The upper side of the flexible mat may be provided with slots which extend in transverse direction of the parallel grooves and communicate with the respective grooves. The slots serve to discharge urine from the walking surface to the grooves easily. The slots are narrower than the grooves; the slots may be considered as small discharge channels leading to the grooves which can be considered as main discharge channels.

The slots may have respective bottoms which are inclined downwardly in a direction from the centre between the neighbouring grooves towards the grooves. This improves the speed of discharging urine to the grooves.

The upper side of the substrate and the lower side of the mat may comprise a cooperating recess and projection which are located between the rigid member and one of the grooves for locking the mat with respect to the substrate in transverse direction of the grooves. This provides a further locking of the mat in transverse direction of the grooves, particularly between two protrusions in longitudinal direction of the groove.

The disclosure is also related to a substrate for a grooved floor element as described hereinbefore, wherein the substrate is made of rigid plastic, such as a composite. The substrate may have similar features as described in relation to the floor element.

The substrate may comprises parallel recesses between which a plurality of protrusions are located at a distance from each other in longitudinal direction of the recesses.

The disclosure is also related to a flexible mat for a grooved floor element as described hereinbefore, wherein the mat has a rectangular shape and a length to width ratio which is larger than 5 and wherein the mat is provided with a plurality of through-holes covering more than 10% of the surface of the mat. Preferably the length to width ratio is larger than 8 or even 10 such that installation can be performed efficiently. The mat may have similar features as described in relation to the floor element.

The invention will hereafter be elucidated with reference to the schematic drawings showing embodiments of the invention by way of example.
Fig. 1 is a plan view of a part of the interior of a cowshed.
Fig. 2 is a perspective view of a part of a floor of a cowshed such as shown in Fig. 1.
Fig. 3 is a cross-sectional view of the floor as shown in Fig. 2.
Fig. 4 is a perspective view of an embodiment of a floor element according to the invention.
Fig. 5 is a plan view of a substrate of the floor element of Fig. 4.
Fig. 6 is a side view of the substrate as shown in Fig. 5.
Fig. 7 is a sectional view along the line VII-VII in Fig. 5 on a larger scale.
Fig. 8 is a perspective view of a flexible mat of the floor element of Fig. 4.
Fig. 9 is a similar view as Fig. 8 of a part of the mat on a larger scale as indicated by IX in Fig. 8.
Fig. 10 is a plan view of the mat of Fig. 8.
Fig. 11 is a side view of the mat of Fig. 10.
Fig. 12 is a sectional view along the line XII-XII in Fig. 10 on a larger scale.
Fig. 13 is an enlarged view of a part of Fig. 11 which is indicated by XIII in Fig. 11.
Fig. 14 is a similar view as Fig. 7, but showing an alternative embodiment of the substrate.

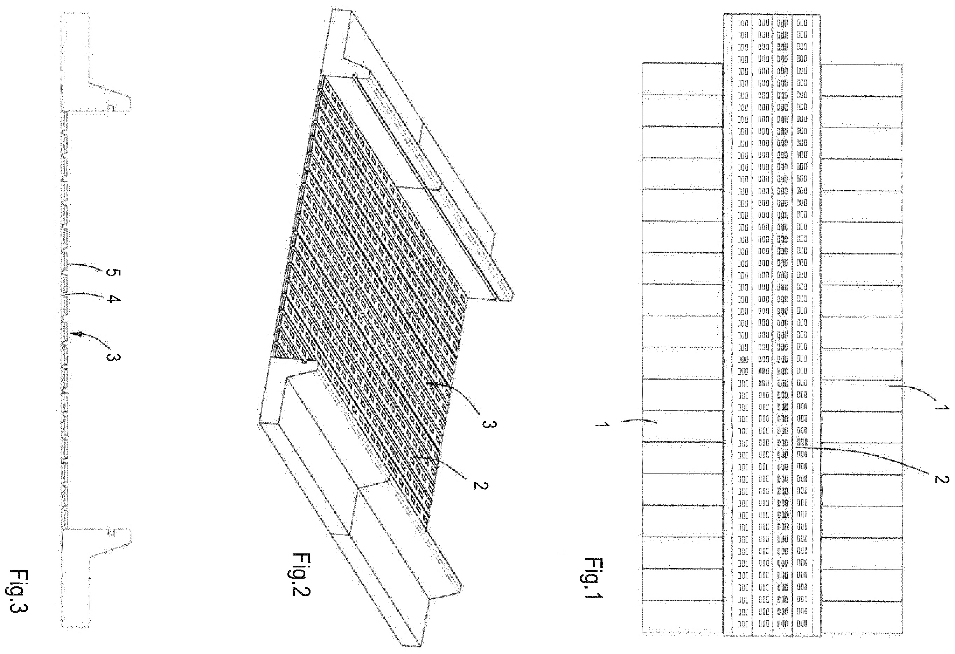

Fig. 1 shows a part of the interior of a cowshed for dairy cows as seen from above. The cowshed has two rows of cubicles 1 located at opposite sides of a walking alley 2. Fig. 2 shows a part of the walking alley 2 in perspective view and Fig. 3 shows a cross-section thereof. A lot of alternative layouts of cowsheds are conceivable.

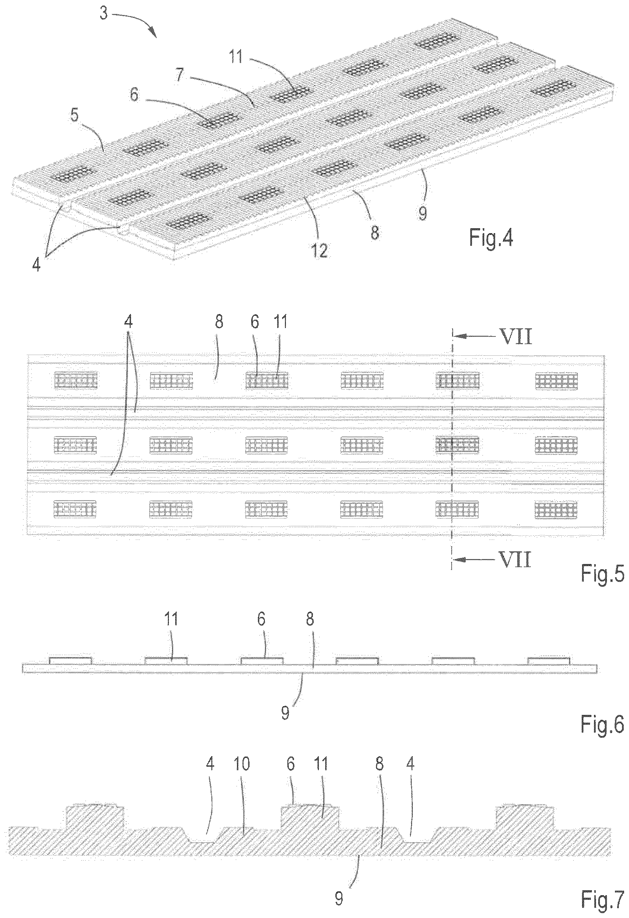

The walking alley 2 has a floor which comprises a plurality of grooved floor elements 3. An embodiment of one grooved floor element 3 is shown in Fig. 4. The floor element 3 is rectangular and has two parallel grooves 4 in longitudinal direction thereof. Furthermore, the floor element 3 has a walking surface 5 which is broken by the parallel grooves 4. Fig. 3 shows that six four floor elements 3 are placed next to each other in transverse direction of the walking alley 2. The six floor elements 3 are not exactly the same, but they are adapted such that grooves are also present at a transfer between adjacent floor elements 3. If two identical floor elements 3 of the type as shown in Fig. 4 would be installed against each other, there would be no or at least a narrow groove at the transfer between adjacent floor elements. For that reason, an alternative floor element 3 may have a protrusion at a lower portion of a side edge thereof which may form a bottom of a groove at the transfer between adjacent floor elements 3.

The floor element 3 may have a length of 1500 mm, a width of 500 mm and a height of 40 mm, but alternative dimensions are conceivable. The widths of the grooves 4 at the walking surface 5 may vary, but may be about 30-50 mm, for example. The depth of a groove 4 may be 30 mm, for example. The distance between two neighbouring grooves 4 may be 125 mm, for example.

In the situation as illustrated in Fig. 3 the floor elements 3 are attached to a flat subfloor, for example a concrete floor. The floor elements 3 are installed such that the grooves 4 of adjacent floor elements 3 in longitudinal direction are aligned. Consequently, urine can drain along the grooves 4 to a liquid-manure reservoir. Furthermore, a manure scraper (not shown) can remove solid manure from the floor elements 3 by moving back and forth along the walking alley 2 several times a day. The solid manure is transported to a slurry pit (not shown) at the end of the walking alley 2.

Fig. 4 shows that the walking surface 5 between two neighbouring grooves 4 has a hard region 6 and a soft region 7. The floor element 3 comprises a substrate 8, which is made of a rigid plastic, for example a composite. The substrate is shown as a separate part in Fig. 5 as seen from above. Fig. 6 shows a side view at the long side of the substrate and Fig. 7 shows an enlarged cross-sectional view. The substrate 8 has a lower side 9 opposite to the walking surface 5, which can be directly and entirely supported by a subfloor. In this case the lower side 9 is flat. It is also conceivable that the contact surface between the substrate and the subfloor is less than 100%, but preferably it is more than 50% of the projected lower surface of the substrate.

As shown in Figs. 4 and 7 the grooves 4 extend from the walking surface 5 downwardly into the substrate 8. Hence, the grooves 4 are partly formed by parallel elongate recesses in the substrate 8. The thickness of the substrate 8 at the recess may be 10 mm, for example. In fact the substrate 8 has an elevated portion 10 between two neighbouring grooves 4. In this case the elevated portion 10 extends along the entire floor element 3. On top of the elevated portion 10 are respective block-shaped protrusions 11, in this case six protrusions 11 in longitudinal direction. The protrusions 11 are located at the centre of the elevated portions 10 between two neighbouring grooves 4. Fig. 7 shows that the elevated portion 10 forms a plateau between two neighbouring grooves 4, which plateau supports the protrusions 11. A protrusion 11 may have a width of 45 mm, a length of 110 mm and a height of 20 mm, for example, but alternative dimensions are conceivable. The distance between the upper side of the plateau and the lower side 9 of the substrate may be 20 mm.

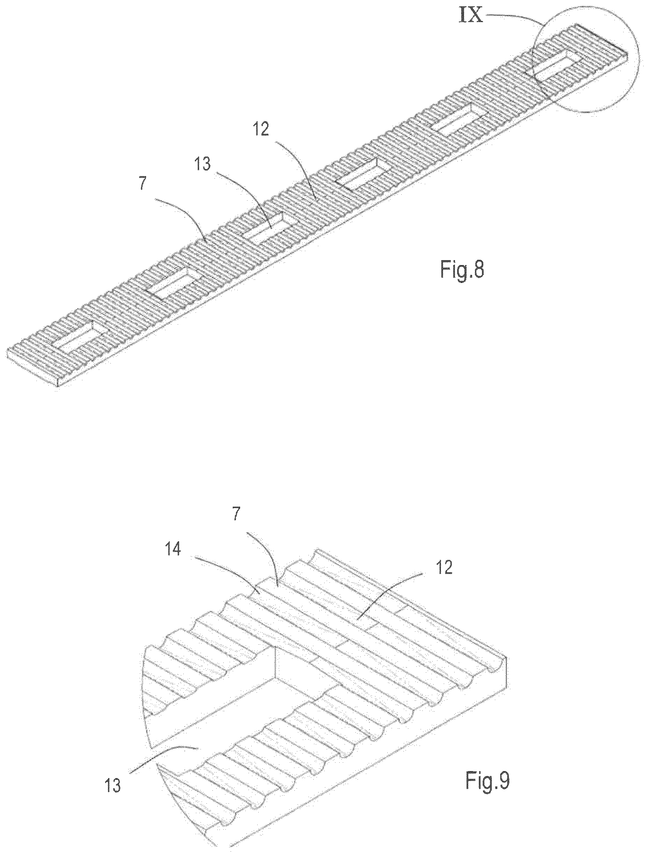

Fig. 4 shows that the soft region 7 of the walking surface 5 is formed by three flexible mats 12. In practice the mats 12 may be made of rubber. Fig. 8 shows one mat 12 and Fig. 9 shows an enlarged part thereof. The flexible mat 12 is provided with six rectangular through-holes 13 in which respective protrusions 11 of the substrate 8 fit. Hence the mat 12 surrounds the protrusions 11 and rests on top of the elevated portion 10 between two neighbouring grooves. The thickness of the mat 12 may be 20 mm. Its length is preferably the same as the length of the substrate 8. When the mat 12 is installed on the substrate 8, the upper surfaces of the protrusions 11 and the mat 12 are substantially flush.

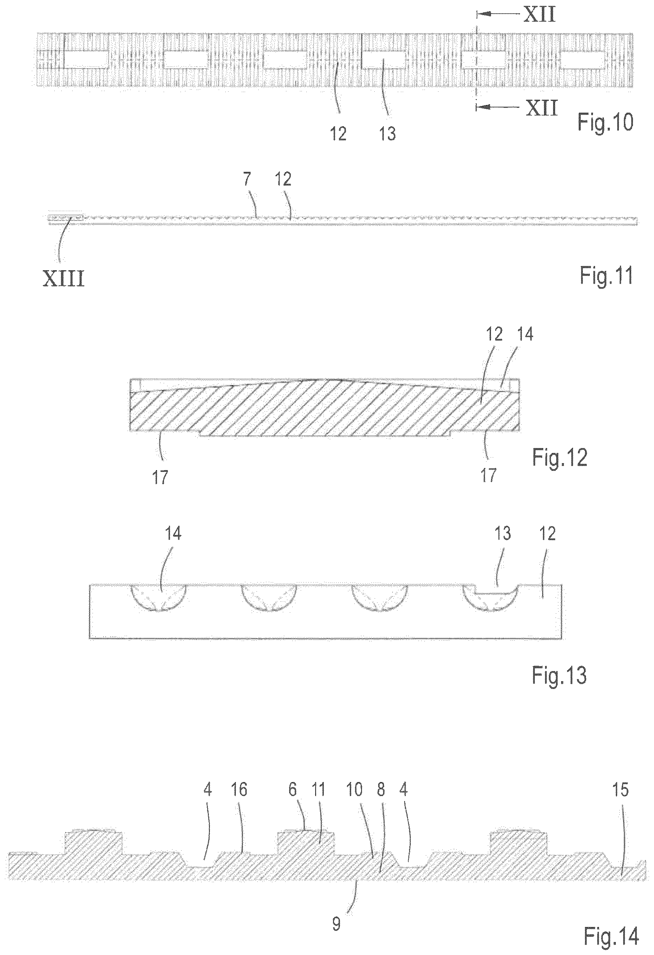

Fig. 10 shows the flexible mat 12 as seen from above. Fig. 11 shows a side view at the long side thereof, Fig. 12 shows a cross-sectional view and Fig. 13 shows an enlarged part of the mat 12. The figures illustrate that the flexible mat 12 is provided with narrow transverse slots 14 for draining urine to the longitudinal grooves 4 of the floor element 3.

Since the protrusions 11 are integral with the remainder of the substrate 8 they are rigid members and their upper surfaces form the hard regions 6 of the walking surface 5. The flexible mat 12 is an elastic member and its upper surface forms the soft region 7 of the walking surface 5. The width of the protrusion 11 is for example 30 mm, whereas the distance between two neighbouring grooves is 130 mm, for example.

Opposite side walls of the protrusions 11 and cooperating opposite inner side walls of the flexible mat 12 may be tapered in a direction from the walking surface 5 towards the substrate 8. This creates a proper fixing of the flexible mat 12 to the substrate 8.

Fig. 14 shows a substrate 8 of an alternative embodiment of the floor element 3. In this case a lower portion of a side edge of the substrate 8 has a protrusion 15, at the right side in Fig. 14, which partly forms a bottom of a groove after installing the floor element 3 adjacent to another floor element 3.

The substrates 8 may be fixed to a subfloor before the mats 12 are attached to the substrates 8. At the end of the lifetime of the mats 12 they can be replaced by new ones without removing the substrates 8.

Figs. 7 and 14 show that the substrate 8 is provided with small upwardly directed projections 16 on top of the elevated portions 10. Each projection 16 is located between a groove 4 and the protrusion 11. The mat 12 has recesses 17 at its lower side, as shown in Fig. 12, which recesses 17 cooperate with the projections 16 of the substrate 8. This configuration provides an additional lock of the mat 12 in transverse direction of the grooves 4, particularly between two protrusions 11 in longitudinal direction.

The invention is not limited to the embodiments shown in the drawings and described hereinbefore, which may be varied in different manners within the scope of the claims. For example, the shape of the grooves may vary.

## Claims

1. A floor (2) for a cowshed, comprising a grooved floor element (3), said grooved floor element (3) comprising a substrate (8) and a walking surface (5) broken by parallel grooves (4), wherein the walking surface (5) between two neighbouring grooves (4) has a hard region (6) formed by a rigid member (11) and a soft region (7) formed by an elastic member (12), and wherein the rigid member (11) is fixed to the substrate (8), wherein the rigid member (11) is a first rigid member, whereas a second rigid member is located at a distance from the first rigid member in longitudinal direction of the grooves (4) and wherein the elastic member comprises a flexible mat (12) which is supported by the substrate (8), wherein the flexible mat (12) surrounds the first and the second rigid members (11) in the plane of the walking surface (5) and extends up to the neighbouring grooves (4) **characterized in that** the length of the rigid member (11) as measured in transverse direction of the grooves (4) is larger than 15% of the distance between two neighbouring grooves (4).

2. A floor (2) according to claim 1, wherein the rigid member (11) is located at the centre between the neighbouring grooves (4).

3. A floor (2) according to one of the preceding claims, wherein the rigid member (11) is integral with the substrate (8).

4. A floor (2) according to one of the preceding claims, wherein the substrate (8) is made of rigid plastic, preferably a composite.

5. A floor (2) according to one of the preceding claims, wherein the depths of the respective grooves (4) are larger than 40% of the thickness of the floor element, and preferably more than 60% thereof.

6. A floor (2) according to one of the preceding claims, wherein the substrate (8) has an elevated portion (10) at the location where it supports the flexible mat (12).

7. A floor (2) according to one of the preceding claims, wherein the upper side of the flexible mat (12) is provided with slots (14) which extend in transverse direction of the parallel grooves (4) and communicate with the respective grooves (4).

8. A floor (2) according to claim 7, wherein the slots (4) have respective bottoms which are inclined downwardly in a direction from the centre between the neighbouring grooves (4) towards the grooves (4).

9. A floor (2) according to one of the preceding claims, wherein the upper side of the substrate (8) and the lower side of the mat (12) comprise a cooperating recess (17) and projection (16) which are located between the rigid member (11) and one of the grooves (4) for locking the mat (12) with respect to the substrate (8) in transverse direction of the grooves (4).

10. A grooved floor element (3) comprising a substrate (8) and a walking surface (5) broken by parallel grooves (4), wherein the walking surface (5) between two neighbouring grooves (4) has a hard region (6) formed by a rigid member (11) and a soft region (7) formed by an elastic member (12), and wherein the rigid member (11) is fixed to the substrate (8), wherein the rigid member (11) is a first rigid member, whereas a second rigid member is located at a distance from the first rigid member in longitudinal direction of the grooves (4) and wherein the elastic member comprises a flexible mat (12) which is supported by the substrate (8), wherein the flexible mat (12) surrounds the first and the second rigid members (11) in the plane of the walking surface (5) and extends up to the neighbouring grooves (4), wherein the length of the rigid member (11) as measured in transverse direction of the grooves (4) is larger than 15% of the distance between two neighbouring grooves (4).

## Patentansprüche

1. Boden (2) für einen Kuhstall, der ein gerilltes Bodenelement (3) aufweist, wobei das gerillte Bodenelement (3) ein Substrat (8) und eine durch parallele Rillen (4) unterbrochene Lauffläche (5) aufweist, wobei die Lauffläche (5) zwischen zwei benachbarten Rillen (4) einen harten Bereich (6), der durch ein starres Element (11) gebildet wird, und einen weichen Bereich (7), der durch ein elastisches Element (12) gebildet wird, hat, wobei das starre Element (11) am Substrat (8) befestigt ist, wobei das starre Element (11) ein erstes starres Element ist, während sich ein zweites starres Element in Längsrichtung der Rillen (4) in einem Abstand vom ersten starren Element befindet und wobei das elastische Element eine biegsame Matte (12) aufweist, die vom Substrat (8) getragen wird, wobei die biegsame Matte (12) das erste und das zweite starre Element (11) in der Ebene der Lauffläche (5) umgibt und sich bis zu den benachbarten Rillen (4) erstreckt, **dadurch gekennzeichnet, dass** die in Querrichtung zu den Rillen (4) gemessene Länge des starren Elements (11) größer als 15 % des Abstands zwischen zwei benachbarten Rillen (4) ist.

2. Boden (2) nach Anspruch 1, wobei das starre Element (11) in der Mitte zwischen zwei benachbarten Rillen (4) angeordnet ist.

3. Boden (2) nach einem der vorstehenden Ansprüche, wobei das starre Element (11) einstückig mit dem Substrat (8) ausgebildet ist.

4. Boden (2) nach einem der vorstehenden Ansprüche, wobei das Substrat (8) aus starrem Kunststoff, bevorzugt aus einem Verbundmaterial, gefertigt ist.

5. Boden (2) nach einem der vorstehenden Ansprüche, wobei die Tiefen der jeweiligen Rillen (4) mehr als 40 % der Dicke des Bodenelements und bevorzugt mehr als 60 % davon betragen.

6. Boden (2) nach einem der vorstehenden Ansprüche, wobei das Substrat (8) an der Stelle, an der es die biegsame Matte (12) trägt, einen erhöhten Abschnitt (10) aufweist.

7. Boden (2) nach einem der vorstehenden Ansprüche, wobei die Oberseite der biegsamen Matte (12) mit Schlitzen (14) versehen ist, die sich quer zu den parallelen Rillen (4) erstrecken und mit den jeweiligen Rillen (4) in Verbindung stehen.

8. Boden (2) nach Anspruch 7, wobei die Schlitze (4) entsprechende Unterseiten aufweisen, die von der Mitte zwischen benachbarten Rillen (4) nach unten zu den Rillen (4) geneigt sind.

9. Boden (2) nach einem der vorstehenden Ansprüche, wobei die Oberseite des Substrats (8) und die Unterseite der Matte (12) eine Ausnehmung (17) und einen korrespondierenden Vorsprung (16) aufweisen, die sich zwischen dem starren Element (11) und einer der Rillen (4) befinden, um die Matte (12) in Bezug auf das Substrat (8) quer zu den Rillen (4) zu arretieren.

10. Gerilltes Bodenelement (3), das ein Substrat (8) und eine durch parallele Rillen (4) unterbrochene Lauffläche (5) aufweist, wobei die Lauffläche (5) zwischen zwei benachbarten Rillen (4) einen harten Bereich (6), der durch ein starres Element (11) gebildet wird, und einen weichen Bereich (7), der durch ein elastisches Element (12) gebildet wird, aufweist, wobei das starre Element (11) am Substrat (8) befestigt ist, wobei das starre Element (11) ein erstes starres Element ist, während sich ein zweites starres Element in Längsrichtung der Rillen (4) in einem Abstand vom ersten starren Element befindet und wobei das elastische Element eine biegsame Matte (12) aufweist, die vom Substrat (8) getragen wird, wobei die biegsame Matte (12) das erste und das zweite starre Element (11) in der Ebene der Lauffläche (5) umgibt und sich bis zu den benachbarten Rillen (4) erstreckt, wobei die in Querrichtung zu den Rillen (4) gemessene Länge des starren Elements (11) größer als 15 % des Abstands zwischen zwei benachbarten Rillen (4) ist.

## Revendications

1. Plancher (2) pour une étable, comprenant un élément de plancher cannelé (3), ledit élément de plancher cannelé (3) comprenant un substrat (8) et une surface de marche (5) brisée par des cannelures parallèles (4), dans lequel la surface de marche (5) entre deux cannelures voisines (4) possède une région dure (6) formée par un organe rigide (11) et une région souple (7) formée par un organe élastique (12), et dans lequel l'organe rigide (11) est fixé au substrat (8), dans lequel l'organe rigide (11) est un premier organe rigide, tandis qu'un second organe rigide est situé à une distance du premier organe rigide dans la direction longitudinale des cannelures (4) et dans lequel l'organe élastique comprend un tapis flexible (12) qui est soutenu par le substrat (8), dans lequel le tapis flexible (12) encercle les premier et second organes rigides (11) dans le plan de la surface de marche (5) et s'étend jusqu'aux cannelures voisines (4), **caractérisé en ce que** la longueur de l'organe rigide (11) telle que mesurée dans la direction transversale des cannelures (4) est supérieure à 15 % de la distance entre deux cannelures voisines (4).

2. Plancher (2) selon la revendication 1, dans lequel l'organe rigide (11) est situé au centre entre les cannelures voisines (4).

3. Plancher (2) selon l'une des revendications précédentes, dans lequel l'organe rigide (11) est solidaire du substrat (8).

4. Plancher (2) selon l'une des revendications précédentes, dans lequel le substrat (8) est constitué de plastique rigide, de préférence d'un composite.

5. Plancher (2) selon l'une des revendications précédentes, dans lequel les profondeurs des cannelures respectives (4) sont supérieures à 40 % de l'épaisseur de l'élément de plancher, et de préférence supérieures à 60 % de celle-ci.

6. Plancher (2) selon l'une des revendications précédentes, dans lequel le substrat (8) possède une partie surélevée (10) à l'endroit où il soutient le tapis flexible (12).

7. Plancher (2) selon l'une des revendications précédentes, dans lequel le côté supérieur du tapis flexible (12) est muni de fentes (14) qui s'étendent dans la direction transversale des cannelures parallèles (4) et communiquent avec les cannelures respectives (4).

8. Plancher (2) selon la revendication 7, dans lequel les fentes (4) ont des fonds respectifs qui sont inclinés vers le bas dans une direction allant du centre entre les cannelures voisines (4) vers les cannelures (4).

9. Plancher (2) selon l'une des revendications précédentes, dans lequel le côté supérieur du substrat (8) et le côté inférieur du tapis (12) comprennent un évidement (17) et une saillie (16) coopérants qui sont situés entre l'organe rigide (11) et l'une des cannelures (4) pour bloquer le tapis (12) par rapport au substrat (8) dans la direction transversale des cannelures (4).

10. Élément de plancher cannelé (3) comprenant un substrat (8) et une surface de marche (5) brisée par des cannelures parallèles (4), dans lequel la surface de marche (5) entre deux cannelures voisines (4) possède une région dure (6) formée par un organe rigide (11) et une région souple (7) formée par un organe élastique (12), et dans lequel l'organe rigide (11) est fixé au substrat (8), dans lequel l'organe rigide (11) est un premier organe rigide, tandis qu'un second organe rigide est situé à une distance du premier organe rigide dans la direction longitudinale des cannelures (4) et dans lequel l'organe élastique comprend un tapis flexible (12) qui est soutenu par le substrat (8), dans lequel le tapis flexible (12) encercle les premier et second organes rigides (11) dans le plan de la surface de marche (5) et s'étend jusqu'aux cannelures voisines (4), dans lequel la longueur de l'organe rigide (11) telle que mesurée dans la direction transversale des cannelures (4) est supérieure à 15 % de la distance entre deux cannelures voisines (4).
